# EUROPEAN PATENT SPECIFICATION

(11) **EP 2 876 371 B1**
(45) Date of publication and mention of the grant of the patent: **07.11.2018**
(21) Application number: 14175957.1
(22) Date of filing: 07.07.2014
(51) Int. Cl.: F23J 7/00, B01D 53/50, B01D 53/83, F23J 15/00, F23C 10/00

(54) **Method of and apparatus for combusting sulfurous fuel in a circulating fluidized bed boiler**
Verfahren und Vorrichtung zum Verbrennen von schwefelhaltigen Brennstoffen in einem zirkulierenden Wirbelbettkessel
Procédé et appareil pour la combustion de carburant sulfureux dans une chaudière à lit fluidisé circulant

(30) Priority: 22.11.2013 WO PCT/EP2013/074438
(43) Date of publication of application: 27.05.2015
(73) Proprietor: Sumitomo SHI FW Energia Oy, 02130 Espoo (FI)
(72) Inventor: Brand, Tobias, 63762 Grossostheim (DE); Kuivalainen, Reijo, 78310 Varkaus (FI); Möbs, Maria-Helena, 61231 Bad Nauheim (DE); Graf, Rolf, 61381 Friedrichsdorf (DE)
(74) Representative: Genip Oy

(56) References cited:
- WO-A1-89/07974
- US-A- 4 312 280
- US-B1- 6 290 921
- US-B2- 6 912 962
- US-B2- 7 427 384

## Description

### BACKGROUND OF THE INVENTION

### Field of the Invention

The present invention relates to a method of and an apparatus for combusting sulfurous fuel in a circulating fluidized bed boiler. Especially the invention relates to reducing sulfur dioxide (SO₂) content in the exhaust gas emanating from a circulating fluidized bed (CFB) boiler by using a dry circulating fluidized bed (CFB) scrubber.

### Description of related art

When combusting sulfur-containing fuels, the sulfur in the fuel is converted to sulfur oxides, mainly sulfur dioxide, which may be harmful if emitted to the environment in large quantities. Dry flue gas scrubbing in a circulating fluidized bed scrubber is a commonly used method to reduce SO₂ content in the flue gases emanating from different kinds of plants, such as power boilers, cement kilns, glass furnaces and waste incinerators. When using a circulating fluidized bed (CFB) boiler, SO₂ content of the exhaust gas is commonly reduced by feeding limestone into the furnace of the boiler. At the temperatures prevailing in the furnace of a CFB boiler, usually from 750 °C to 950 °C, calcium carbonate (CaCO₃) of the limestone is calcined to form calcium oxide (CaO), which reacts with sulfur oxides to produce calcium sulfate (CaSO₄), which can be removed from the furnace along with the ashes produced in the combustion.

Relatively good sulfur-reduction efficiency can be obtained in a CFB boiler solely by feeding limestone directly into the furnace. However, because a layer of CaSO₄ forming on the surface of the CaO particles prevents the core of the particles from reacting with SO₂, an excess of limestone has to be fed into the furnace in order to obtain a desired level of SO₂ removal. For example, in order to achieve 98 % sulfur reduction efficiency in the furnace, Ca/S molar ratio as high as 4 to 5 is required.

Ash formed in a combustion process can be divided to fly ash, which is entrained with the exhaust gas from the furnace and bottom ash which collects to the bottom of the furnace. During the combustion, bottom ash is formed at a rate which, as well as the composition of the bottom ash, depends on the operating conditions of the boiler, especially on the properties of the fuel, sorbent and inert bed material fed into the furnace. Typically from 10 % to 50 % of the ashes formed in a circulating fluidized bed boiler are removed from the furnace as bottom ash. Bottom ash is generally coarser than the fly ash.

When using high Ca/S ratios, such as from 4 to 5, the bottom ash and fly ash discharged from the furnace invariably contain a large amount of CaO, typically from about 10 % to more than 50 %, which makes the use or disposal of the ashes difficult.

Another problem associated with the conventional sulfur-reduction process in a CFB furnace is that the calcination of calcium carbonate is an endothermic reaction, with a reaction energy 178.4 kJ/kmol. Thus, the calcination of excessive amounts of limestone decreases the thermal efficiency of the boiler. For example, in order to achieve 98 % sulfur reduction when combusting coal containing 2 % sulfur, limestone is introduced at a rate providing a Ca/S ratio of about 5, and the energy required for calcination reduces the thermal efficiency of the boiler by about 2 percentage points.

In order to eliminate the need for such high Ca/S ratios, U.S. Patent No. 4,185,080 teaches to remove ashes, calcium oxide and calcium sulfate from a fluidized bed and to separate fine grade ashes, e.g. by sifting, and calcium sulfate, e.g. in a drum, from the calcium oxide. The calcium oxide is then dry slaked to an extremely fine-grained calcium hydroxide which is blasted into the fluidized bed or into a free board above the bed to react with sulfur oxides in the combustion gases. U.S. Patent No. 5,345,883 teaches to re-activate recirculating sorbent material of a circulating fluidized bed boiler by injecting high pressure water as a liquid or steam to mechanically fracture used sorbent particles so as to expose unreacted sorbent material in the core of the particles. U.S. Patents No. 5,551,357 and 6,912,962 show further methods of enhancing flue gas desulfurization by, e.g. hydrating a portion of CaO in the bottom ash before injecting it back to the furnace.

An alternative for enhancing sulfur reduction in a fluidized bed boiler is to perform only a portion of the required sulfur dioxide reduction in the furnace, and arrange a second sulfur dioxide reduction device downstream of the furnace. U.S. Patent No. 7,427,384 suggests feeding calcium carbonate to the furnace of a circulating fluidized bed boiler so as to provide a Ca/S molar ratio of at most about 1.0 and further reducing the sulfur content of the flue gas in a sulfur reducing stage, such as dry sulfur-reduction equipment, downstream of the furnace. Correspondingly, US. Patent No 7,862,789 suggests conveying flue gases from a circulating fluidized bed boiler to a flash dry absorber and introducing lime into the flash dry absorber.

U.S. Patent No. 4,309,393 discloses a sulfur-reduction method for a fluidized bed boiler, in which limestone is added to the furnace in Ca/S ratios ranging from 1 to 1.5, so as to provide sulfur reduction of 30 to 60 % in the furnace. CaO-containing ashes are then collected from the furnace and slaked to form lime slurry for utilization in a SO₂ stripping unit, such as a spray dryer, disposed in the flue gas duct downstream of the furnace. U.S. Patent No 6,290,921 teaches to feed sieved CaO-containing bottom ash of a circulating fluidized bed boiler to a moistening device between a dust separator and a contact reactor of a sulfur reduction system.

An object of the present invention is to provide a method of and an apparatus for combusting sulfurous fuel in a circulating fluidized bed boiler with improved desulfurization.

### SUMMARY OF THE INVENTION

According to one aspect, the present invention provides a method of combusting sulfurous fuel in a circulating fluidized bed boiler, comprising the steps of: feeding sulfurous fuel to a furnace of the boiler, combusting the fuel and generating SO₂-containg exhaust gas; feeding CaCO₃-containing sorbent to the furnace for converting the CaCO₃ to CaO and utilizing a portion of the CaO in the furnace to convert a portion of the SO₂ to CaSO₄; conveying the exhaust gas along an exhaust gas channel from the furnace to a dry circulating fluidized bed scrubber comprising a reactor having means for feeding water and Ca(OH)₂ for converting SO₂ in the exhaust gas to CaSO₃ and CaSO₄ and a dust separator in gas flow connection with the reactor for separating particulate matter from the exhaust gas, removing CaO-containing bottom ash from the furnace, classifying at least a portion of the removed CaO-containing bottom ash into a coarse bottom ash portion and a finer bottom ash portion in a first stage classifier wherein the coarse bottom ash portion consists of particles having a particle size larger than a first predetermined limit; removing the coarse bottom ash portion from the boiler as a first combustion product, conveying the finer bottom ash portion from the first stage classifier to a second stage classifier to classify the finer bottom ash portion to a finest bottom ash portion and a middle size bottom ash portion, removing the finest bottom ash portion as a second combustion product, conveying the middle size bottom ash portion to a grinder so as to grind the bottom ash portion to have a median particle size of a second predetermined limit; conveying at least a portion of the ground bottom ash portion from the grinder to a hydrator so as to hydrate CaO in the ground bottom ash portion with a controlled amount of water or steam to Ca(OH)₂, and conveying at least a portion of the Ca(OH)₂ from the hydrator to the dry circulating fluidized bed scrubber as a sorbent.

According to another aspect, the present invention provides an apparatus for combusting sulfurous fuel in a circulating fluidized bed boiler, comprising: a furnace and means for feeding sulfurous fuel to the furnace for combusting the fuel and generating SO₂-containg exhaust gas; means for feeding CaCO₃-containing sorbent to the furnace for converting the CaCO₃ to CaO and utilizing a portion of the CaO in the furnace to convert a portion of the SO₂ to CaSO₄; a dry circulating fluidized bed scrubber comprising a reactor having means for feeding water and Ca(OH)₂ for converting SO₂ in the exhaust gas to CaSO₃ and CaSO₄ and a dust separator in gas flow connection with the reactor for separating particulate matter from the exhaust gas; an exhaust gas channel for conveying the exhaust gas from the furnace to the dry circulating fluidized bed scrubber, means for removing CaO-containing bottom ash from the furnace, a first stage classifier for classifying at least a portion of the removed CaO-containing bottom ash into a coarse bottom ash portion and a finer bottom ash portion wherein the coarse bottom ash portion consists of particles having a particle size larger than a first predetermined limit; a discharge channel for removing the coarse bottom ash portion from the first stage classifier to a hopper, a second stage classifier for classifying the finer bottom ash portion into a finest bottom ash portion and a middle size bottom ash portion wherein the finest bottom ash portion consists of particles having a particle size smaller than a third predetermined limit; a discharge channel for removing the finest bottom ash portion; a grinder; means for conveying the middle size bottom ash portion to a fine ash channel for conveying the middle size bottom ash portion to the grinder so as to grind the bottom ash portion to have a median particle size of a second predetermined limit; a hydrator; a ground ash channel for conveying at least a portion of the ground bottom ash portion from the grinder to the hydrator so as to hydrate CaO in the ground bottom ash portion with a controlled amount of water or steam to Ca(OH)₂, and a hydrated ash channel for conveying at least a portion of the Ca(OH)₂ from the hydrator to the dry circulating fluidized bed scrubber as a sorbent.

Dry circulating fluidized bed (CFB) scrubbers are known, for example, from European patent No. 0 211 458 B2. Usually dry CFB scrubbers use fresh hydrated lime as the sorbent, but in some cases, especially when desulfurizing flue gas from a CFB boiler, it is possible to form at least a portion of the sorbent from CaO-containing ash particles entrained with the flue gas. German patent No. 41 04 180 C1 teaches how fly ash, separated from the flue gas, can be prepared to be used as a sorbent.

Typically the particle size distribution of the bottom ash of a CFB boiler is such that more than 90 % of the bottom ash particles have a diameter between 0.1 mm and 20 mm, with a median of, for example, 0.35 mm. The present invention is especially based on the finding that, in addition to the particle size, bottom ash distinguishes from fly ash also in its composition. Thereby, bottom ash may, after being treated properly, be utilized as an efficient sorbent in a dry circulating fluidized bed scrubber.

The step of classifying, i.e. selective classification or separation of the CaO-containing bottom ash effectively divides the bottom ash into a first portion, so-called coarse bottom ash portion and a second portion, so-called finer bottom ash portion. The finer bottom ash portion has, in addition to smaller particle size, also lower density, higher lime content and lower potential for abrasion and erosion. The coarse bottom ash portion has, correspondingly, in addition to larger particle size, also higher density, lower lime content and higher potential for abrasion and erosion. According to a preferred embodiment of the present invention, both the finer bottom ash portion and coarse bottom ash portion contain 10 % - 90 %, even more preferably 20 % - 80 %, of the bottom ash. Advantageously the coarse bottom ash portion consists of particles having a particle size larger than a first predetermined limit. By the term particle size is here meant a particle size based on a sieve analysis. The first predetermined limit depends on the combustion conditions. In typical conditions, the first predetermined limit is preferably at most 2 mm, even more preferably at most 1 mm. In practice, it is not necessary to continuously determine the particle size distribution, but the particle size distribution is usually known, for example, on the basis of sampling, and the classification can be controlled by controlling the separation parameters so as to control the ratios of the different mass flows.

Between the first stage classifier and the grinder is arranged a second stage classifier to separate a portion of the finer bottom ash, the finest bottom ash portion, to be removed as a second combustion product from the boiler. The finest bottom ash portion, which has a median particle size smaller than a third predetermined limit, has a relatively high concentration of CaSO₄. When using a second stage classifier, the finer bottom ash portion is divided into the finest bottom ash portion and a middle size bottom ash portion. Thereby, only the middle size bottom ash portion is conveyed to the grinder, and the finest bottom ash portion is, similarly as the coarse bottom ash portion, discharged from the system.

The classifying of the bottom ash in the first stage and second stage classifiers is performed by any suitable equipment, such as a centrifugal separator, an air classifier or a sieve. During the first stage classifying, i.e., during the classifying in the first stage classifier, the largest particles, which have high potential for causing abrasion and erosion of any downstream equipment, are separated from the finer bottom ash portion. A special advantage of the first stage classifying is that by removing the largest particles, the relative amount of silicates, e.g., sand or SiO₂, and Fe₂O₃ in the finer bottom ash portion is reduced. A special advantage of the second stage classifying is that by removing the smallest particles the relative amount of the product, e.g., CaSO₄ in the finer bottom ash is reduced. The classifying is thus especially advantageous because it decreases the relative amount of material which is inert for SO₂ removal.

On the other hand, during the classifying of the bottom ash the lime content of the coarse and finest bottom ash portions is decreased. Thereby, the usability of the coarse and finest bottom ash portions for, for example, stabilized landfill is improved. For this reason, the coarse and finest bottom ash portions are to be considered as the first and second combustion products, respectively, of the CFB boiler.

According to the present invention, the middle size bottom ash portion is conducted from the classifying step to a step of grinding. Because the classifying step eliminates or at least reduces the amount of largest and most erosive material in the bottom ash, the grinding equipment can be of simple and low costs design. The grinding device can be, for example, a hammer mill. According to the present invention, it is important to perform the step of grinding only after the step of classifying, because by reversing the order, the above mentioned advantages of the classifying would be lost.

The grinding of the middle size bottom ash portion is advantageously performed to a particle size distribution which depends on the CaO content of the respective bottom ash portion. Thereby, the second predetermined limit depends on the CaO content of the respective bottom ash portion. It has been found that the higher is the CaO content the less there is need for grinding the bottom ash. Thus, for example, when the CaO content is 10 % the grinding is preferably performed so far that 50 % of the particles have a particle size smaller than about 5-10 µm. In other words, the second predetermined limit is 5-10 µm, or the particle size distribution of the ground bottom ash has a median of 5-10 µm. On the other hand, when the CaO content of the bottom ash portion is higher, for example, 40 %, 90 % and 95 %, not so much grinding is needed but it is enough to obtain median particle size of 15-20 µm, 30-40 µm and 60-70 µm, respectively.

A simple fit to optimal grinding results shows that for CaO contents ranging from 10 % to 90 %, the particles are preferably ground so as to have a median particle size of 0.43*M ± 3 µm, where M is the CaO content in percent's. Reason for the above mentioned optimal grinding is that particles with high CaO content are efficiently broken during the subsequent step, i.e. hydrating of the particles, and therefore there is less need for the mechanical grinding. If the CaO content of the particles is small, the particles are advantageously ground to particle size distribution having a relatively low median value in order to obtain an efficient sorbent for the dry CFB scrubber. If the CaO content is higher, grinding energy can be saved by grinding less.

When considering the larger particles of the particle size distribution, instead of the median, bottom ash having a CaO content of 10 % is advantageously ground so far that 90 % of the particles have a particle size below 20-30 µm. Correspondingly, for CaO contents of 40 %, 90 % and 95 %, the bottom ash portion is advantageously ground to a particle size distribution having 90 % of the particles below the limits of 70-80 µm, 300-400 µm and 1000-2000 µm, respectively.

At least a portion of the middle size bottom ash portion is conveyed from the grinding step further to a step of hydration with water and/or steam. Hydration is preferably performed by such a small amount of water that the hydrated product is essentially dry. Hydrated portion of the bottom ash is conveyed from the hydrator either directly into a CFB dry scrubber or into a silo from where it is injected into the scrubber when needed.

The equipment used in the hydration may advantageously be a CFB hydrator but it may alternatively be a hydrator of any other suitable type. By controlling the hydrating parameters, i.e., water content, temperature and reaction time, the quality of the activated bottom ash may be varied from standard quality reagent to high quality reagent; the latter consisting, e.g., of hydrated lime with increased moisture content and/or increased surface area.

The above described process of desulfurizing exhaust gas may in some applications optionally be complemented by further material flows. For example, fresh lime and/or a part of material collected by a dust separator arranged downstream of the CFB scrubber may be conveyed to the hydrator to produce further activated sorbent to the CFB scrubber. Another possibility is to convey middle size bottom ash from the grinding step back to the furnace to be used as sulfur sorbent therein. In some embodiments it is advantageous to convey a portion of the material collected by the dust separator arranged downstream of the CFB scrubber to the furnace of the CFB boiler, mainly for oxidizing CaSO₃ to CaSO₄.

The above brief description, as well as further objects, features, and advantages of the present invention will be more fully appreciated by reference to the following detailed description of the presently preferred, but nonetheless illustrative, embodiments in accordance with the present invention, when taken in conjunction with the accompanying drawings.

### BRIEF DESCRIPTION OF THE DRAWINGS

Fig. 1 shows the schematic diagram of a circulating fluidized bed boiler with an apparatus for reducing sulfur oxide emissions according to an embodiment of the present invention.
Fig. 2 shows the schematic diagram of a circulating fluidized bed boiler with an apparatus for reducing sulfur oxide emissions according to a second embodiment where the second stage classifier according to the invention has not been represented.
Fig. 3 shows the schematic diagram of a circulating fluidized bed boiler with an apparatus for reducing sulfur oxide emissions according to a third embodiment where the second stage classifier according to the invention has not been represented.
Fig. 4 shows the schematic diagram of a circulating fluidized bed boiler with an apparatus for reducing sulfur oxide emissions according to a fourth embodiment where the second stage classifier according to the invention has not been represented.

### DETAILED DESCRIPTION OF THE INVENTION

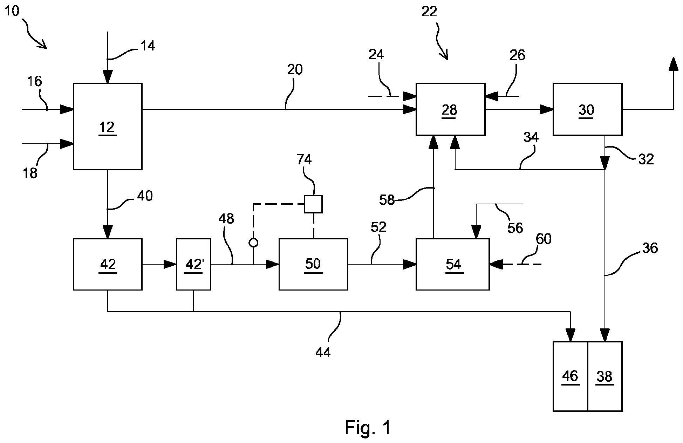

The schematic diagram of FIG 1 shows a circulating fluidized bed (CFB) boiler (10) with a dry circulating fluidized bed (CFB) scrubber (22) for reducing sulfur oxide emissions from the boiler. The furnace (12) of the boiler comprises means for introducing sulfur-containing fuel (14), such as coal, petcoke or biofuel, CaCO₃-containing sulfur sorbent (16), such as limestone, and inert bed material (18), such as sand, into the furnace. The fuel is combusted in the furnace with combustion gas, such as air, not shown in FIG 1, to generate steam, not shown in FIG 1. During the combustion, the sulfur in the fuel oxidizes to sulfur oxides, mainly SO₂. In the temperatures prevailing in the furnace of a CFB boiler, typically from 750 °C to 950 °C, the CaCO₃ in the sorbent is calcined to CaO, which combines with SO₂ to CaSO₃ which again oxidizes to CaSO₄. Because the sulfation of the CaO particles takes place mainly on the outer surface of the particles, the utilization of the CaO is not perfect. Thus, the combustion process generally produces SO₂-containing flue gases and ash which contains CaO particles covered by a layer of CaSO₄.

In accordance with the teaching of, for example, U.S. Patent No. 7,427,384, the sulfur reduction process taking place in the furnace (12) is complemented by further sulfur reduction in a dry circulating fluidized bed (CFB) scrubber (22) arranged in the exhaust gas channel (20) of the boiler. Main elements of the CFB scrubber are a reactor (28), a dust separator (30) and a recirculation channel (34) to circulate a portion of ashes separated by the dust separator back to the reactor. The reactor (28) comprises means (24, 26) for injecting Ca(OH)₂ and water, respectively, to a fluidized bed forming in the reactor (28) so as to cause the SO₂-containing flue gas to react with the Ca(OH)₂ to form CaSO₃ and CaSO₄. The exhaust gas and particles entrained therewith are conveyed from the reactor to the dust separator (30), such a fabric filter, to separate particulate matter (32) from the exhaust gas. Cleaned exhaust gas is conveyed from the dust separator further to be released to the environment. A portion of the particulate matter separated in the dust separator (30) is recycled back to the reactor (28) along a recirculation channel (34) and another portion of the particulate matter is conveyed along a discharge channel (36) to a hopper (38) as an end product of the scrubber.

According to the present invention, CaO-containing bottom ash (40) is conveyed from the furnace (12) to a first stage classifier (42) so as to separate a portion of the bottom ash (44), so-called coarse bottom ash portion, having a particle size larger than a predefined limit, to be removed from the CFB boiler to another hopper (46) as a first combustion product. The first stage classifier (42) is advantageously a sieve, but it can be of any other suitable type, such as a low efficiency cyclone or centrifugal separator. When selecting the type of the classifier, it can be taken into account that a sieve classifies particles almost entirely on the basis of their size, whereas for classifying with a cyclone, the result depends also on the density, or mass, of the particles. Thus, a low efficiency cyclone is especially useful for separating particles having relatively high density, such as silicates, from the bottom ash. By properly selecting the classifying limit, the calcium oxide content of the coarse bottom ash portion can be clearly smaller than that of the remaining finer bottom ash portion. Due to the relatively low calcium oxide content, the first combustion product can be used for, for example, landfill without further treatment.

FIG. 1 shows also a second stage classifier (42'), such as a cyclone, arranged between the first stage classifier (42) and a grinder (50). In the second stage classifier, the finer bottom ash portion is further classified into a finest bottom ash portion and a middle size bottom ash portion. The finest bottom ash portion, which is rich in CaSO₄, is discharged from the boiler together with the first combustion product or separately as a second combustion product. Typically both the coarse fraction and the finer fraction are 10-60 % of the total amount of bottom ash. When the system comprises a second stage classifier (42'), typically the middle size fraction is 10-60 % and the finest fraction 10-40 % of the total amount of bottom ash.

The middle size bottom ash portion is conveyed from the second stage classifier (42') along a fine ash channel (48) to a grinder (50). The grinder is advantageously a hammer mill but alternatively it can be of any other suitable type. Because of the classifying of the ash particles upstream of the grinder the material to be fed into the grinder is not highly erosive, and the grinder can be of simple and low-cost design.

The calcium-particles are broken during the grinding, and fresh CaO is exposed from behind a layer of CaSO₄. The middle size portion of the CaO-containing bottom ash is ground in the grinder so as to have a predefined particle size distribution. It has been found that the higher is the CaO content of the bottom ash portion, the less there is need for grinding. Thus, because the desired particle size distribution depends on the CaO content of the middle size bottom ash portion, the system advantageously comprises means (74) for controlling the grinder on the basis of measured the CaO content of the bottom ash portion. The measurement of the CaO content can be performed by an on-line analyzer, but in many cases it is sufficient to frequently analyze the CaO content, or calcium content, of samples taken from the finer or middle size bottom ash portion. The grinder parameters are then adjusted on the basis of the mass flow of the finer or middle size bottom ash portion by taking into account then CaO content of the bottom ash portion.

The ground bottom ash is conveyed from the grinder along a ground ash channel (52) to a hydrator (54) in which the CaO is hydrated, or dry slaked, by predetermined amount of water or steam (56) to form Ca(OH)₂. The hydrator is advantageously a CFB hydrator, but it can alternatively be of any other suitable type. The surface area and moisture content of the produced Ca(OH)₂ particles can be varied in a known way be varying the operation parameters in the hydrator. The calcium containing ash particles, especially particles with high CaO content, are broken during the hydration to very small particles because of a volume change associated with the hydration. The hydrated lime is conveyed from the hydrator along a hydrated ash channel (58) to the reactor (28) of the CFB scrubber (22) be used as a sorbent.

According to a preferred embodiment of the present invention, a stream of fresh CaO (60) is introduced into the hydrator to be dry slaked therein to form sorbent to be conveyed to the CFB scrubber in addition or instead of sorbent fed with the Ca(OH)₂ feeding means (24).

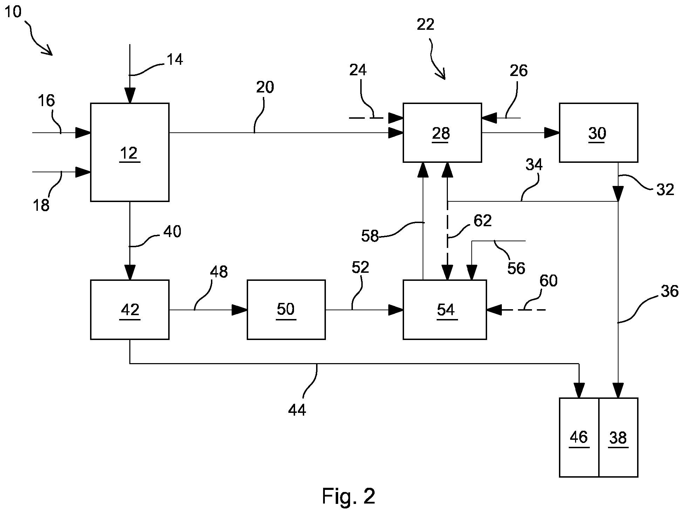

The above described process of desulfurizing exhaust gas may in some applications optionally be complemented by further material flows. For example, FIG 2 shows an embodiment of the present invention, in which a portion of material collected by the dust separator (30) is conveyed along a channel (62) to the hydrator (54). Thereby, CaO particles entrained by the exhaust gas will be activated and converted to Ca(OH)₂ by adding water. The activated particles are then conducted along the channel (58) as sorbent to the reactor (28) of the CFB scrubber (22). This feature is especially advantageous when the amount and CaO content of the fly ash entrained with the exhaust gas are high.

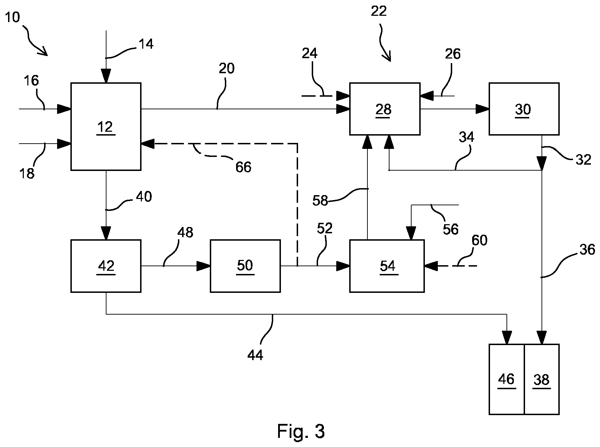

FIG 3 shows an embodiment of the present invention, in which a portion of activated middle size bottom ash portion is conveyed directly from the grinder (50) back to the furnace (12). Because fresh CaO is exposed from behind the CaSO₄ layer during the activation in the grinder, the ground bottom ash portion can act as an efficient sorbent in the furnace. This will reduce the need for feeding limestone or CaCO₃ into the furnace.

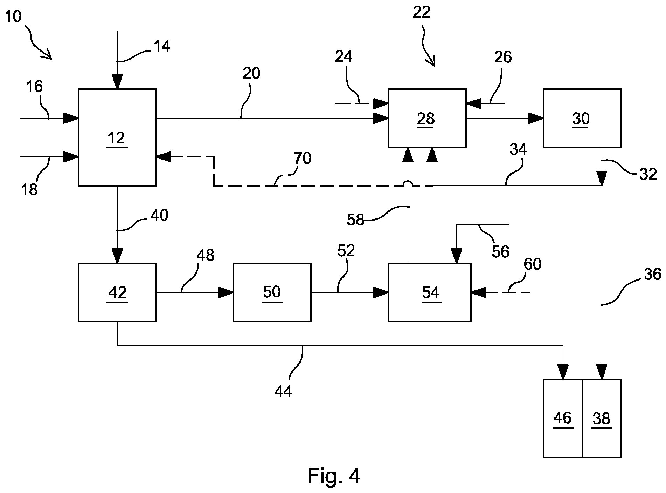

FIG 4 shows an embodiment of the present invention, in which a portion of the material collected by the dust separator (30) arranged downstream of the reactor (28) is conveyed along a channel (70) to the furnace (12) of the CFB boiler. This material flow is especially useful for oxidizing CaSO₃ in the ash collected by the dust separator (30) to CaSO₄, so as to produce a stable combustion product which can be transported to further use without additional treatment.

The main idea of the present invention is to form sorbent to a dry CFB scrubber from the bottom ash of a CFB boiler. This increases the efficiency of the CFB boiler, saves limestone and lime consumption in the process and enables to obtain useful final products.
While the invention has been described herein by way of examples in connection with what are at present considered to be the most preferred embodiments, it is to be understood that the invention is not limited to the disclosed embodiments, but is intended to cover various combinations or modifications of its features and several other applications included within the scope of the invention as defined in the appended claims. It is, for example, possible that the streams of ground or hydrated calcium containing ash which are in FIGS. 1-4 shown as direct injection into the reactor of the CFB scrubber or into the furnace or the hydrator, are optionally non-direct streams via a corresponding silo. It is also possible to use different material flows shown in FIGS. 2-4 in a single application, for example, by combining the activation of material from the dust separator (30) as in FIG. 2 with the conveying of activated ash from the grinder (50) to the furnace, as shown in FIG 3. According to the invention, the second stage classifier (42') shown in FIG. 1 is also implemented in the embodiments of the FIGS. 2-4.

## Claims

1. A method of combusting sulfurous fuel in a circulating fluidized bed boiler (10), comprising the steps of:
a) feeding sulfurous fuel (14) to a furnace (12) of the boiler, combusting the fuel and generating SO₂-containg exhaust gas;
b) feeding CaCO₃-containing sorbent (16) to the furnace for converting the Ca-CO₃ to CaO and utilizing a portion of the CaO in the furnace to convert a portion of the SO₂ to CaSO₄;
c) conveying the exhaust gas along an exhaust gas channel (20) from the furnace to a dry circulating fluidized bed scrubber (22) comprising a reactor (28) having means for feeding water and Ca(OH)₂ for converting SO₂ in the exhaust gas to CaSO₃ and CaSO₄ and a dust separator (30) in gas flow connection with the reactor for separating particulate matter from the exhaust gas, and
d) removing CaO-containing bottom ash (40) from the furnace,
**characterized by** the steps of
e) classifying at least a portion of the removed CaO-containing bottom ash into a coarse bottom ash portion and a finer bottom ash portion in a first stage classifier (42) wherein the coarse bottom ash portion consists of particles having a particle size larger than a first predetermined limit;
f) removing the coarse bottom ash portion from the boiler as a first combustion product (46),
g) conveying the finer bottom ash portion from the first stage classifier (42) to a second stage classifier (42') to classify the finer bottom ash portion to a finest bottom ash portion and a middle size bottom ash portion,
h) removing the finest bottom ash portion as a second combustion product,
i) conveying the middle size bottom ash portion to a grinder (50) so as to grind the bottom ash portion to have a median particle size of a second predetermined limit;
j) conveying at least a portion of the ground bottom ash portion from the grinder to a hydrator (54) so as to hydrate CaO in the ground bottom ash portion with a controlled amount of water or steam (56) to Ca(OH)₂, and
k) conveying at least a portion of the Ca(OH)₂ from the hydrator (54) to the dry circulating fluidized bed scrubber (22) as a sorbent.

2. A method of combusting sulfurous fuel in a circulating fluidized bed boiler according to claim 1, **characterized in that** the second predetermined limit depends on the CaO content of the bottom ash portion conveyed to the grinder.

3. A method of combusting sulfurous fuel in a circulating fluidized bed boiler according to claim 2, **characterized in that** the second predetermined limit is the smaller the lower is the CaO content of the bottom ash portion conveyed to the grinder.

4. A method of combusting sulfurous fuel in a circulating fluidized bed boiler according to claim 1, **characterized in that** the second predetermined limit depends on the CaO content of the bottom ash portion conveyed to the grinder by the formula 0.43*M ± 3 µm in which M is the CaO content in percent's.

5. A method of combusting sulfurous fuel in a circulating fluidized bed boiler according to claim 1, **characterized in that** the method comprises a step of feeding fresh CaO (60) into the hydrator (54).

6. A method of combusting sulfurous fuel in a circulating fluidized bed boiler according to claim 1, **characterized in that** the method comprises a step of feeding a portion of the separated particulate matter from the dust separator (30) to the hydrator (54).

7. A method of combusting sulfurous fuel in a circulating fluidized bed boiler according to claim 1, **characterized in that** the method comprises a step of conveying a portion of the ground fine ash portion from the grinder directly to the furnace (12).

8. A method of combusting sulfurous fuel in a circulating fluidized bed boiler according to claim 1, **characterized in that** the method comprises a step of feeding a portion of the separated particulate matter from the dust separator (30) directly to the furnace (12).

9. An apparatus for combusting sulfurous fuel in a circulating fluidized bed boiler (10), comprising:
- a furnace (12) and means for feeding sulfurous fuel (14) to the furnace (12) for combusting the fuel and generating SO₂-containg exhaust gas;
- means for feeding CaCO₃-containing sorbent (16) to the furnace for converting the CaCO₃ to CaO and utilizing a portion of the CaO in the furnace to convert a portion of the SO₂ to CaSO₄;
- a dry circulating fluidized bed scrubber (22) comprising a reactor (28) having means for feeding water and Ca(OH)₂ for converting SO₂ in the exhaust gas to CaSO₃ and CaSO₄ and a dust separator (30) in gas flow connection with the reactor for separating particulate matter from the exhaust gas;
- an exhaust gas channel (20) for conveying the exhaust gas from the furnace to the dry circulating fluidized bed scrubber (22), and
- means for removing CaO-containing bottom ash (40) from the furnace, **characterized in that** the apparatus comprises
- a first stage classifier (42) for classifying at least a portion of the removed CaO-containing bottom ash into a coarse bottom ash portion and a finer bottom ash portion wherein the coarse bottom ash portion consists of particles having a particle size larger than a first predetermined limit;
- a discharge channel (44) for removing the coarse bottom ash portion from the first stage classifier to a hopper (46),
- a second stage classifier (42') for classifying the finer bottom ash portion into a finest bottom ash portion and a middle size bottom ash portion wherein the finest bottom ash portion consists of particles having a particle size smaller than a third predetermined limit;
- a discharge channel for removing the finest bottom ash portion;
- a grinder (50);
- means for conveying the middle size bottom ash portion to a fine ash channel (48) for conveying the middle size bottom ash portion to the grinder (50) so as to grind the bottom ash portion to have a median particle size of a second predetermined limit;
- a hydrator (54);
- a ground ash channel (52) for conveying at least a portion of the ground bottom ash portion from the grinder (50) to the hydrator (54) so as to hydrate CaO in the ground bottom ash portion with a controlled amount of water or steam (56) to Ca(OH)₂, and
- a hydrated ash channel (58) for conveying at least a portion of the Ca(OH)₂ from the hydrator (54) to the dry circulating fluidized bed scrubber (22) as a sorbent.

10. An apparatus for combusting sulfurous fuel in a circulating fluidized bed boiler (10) according to claims 9, **characterized in that** the apparatus comprises means (74) for controlling the grinder (50) on the basis of the CaO content of the bottom ash portion conveyed to the grinder.

11. An apparatus for combusting sulfurous fuel in a circulating fluidized bed boiler (10) according to claim 10, **characterized in that** the apparatus comprises means (66) for of conveying a portion of ground bottom ash portion from the grinder to the furnace (12).

## Patentansprüche

1. Verfahren zum Verbrennen von schwefelhaltigem Brennstoff in einem zirkulierenden Wirbelschichtkessel (10), das die folgenden Schritte umfasst:
a) Zuführen von schwefelhaltigem Brennstoff (14) zu einem Ofen (12) des Kessels, Verbrennen des Brennstoffs und Erzeugen von SO₂-haltigem Abgas;
b) Zuführen von CaCO₃-enthaltendem Sorptionsmittel (16) zu dem Ofen, zum Umwandeln des CaCO₃ in CaO und Verwenden eines Teils des CaO in dem Ofen, um einen Teil des SO₂ in CaSO₄ umzuwandeln;
c) Fördern des Abgases entlang eines Abgaskanals (20) von dem Ofen zu einem zirkulierenden Wirbelschicht-Trockenwäscher (22), der einen Reaktor (28) mit Mitteln zum Zuführen von Wasser und Ca(OH)₂ umfasst, zum Umwandeln von SO₂ im Abgas zu CaSO₃ und CaSO₄ sowie einen Staubabscheider (30) in Gasströmungsverbindung mit dem Reaktor, zum Abscheiden von Feinstaub aus dem Abgas, und
d) Entfernen CaO-haltiger Bodenasche (40) aus dem Ofen,
**gekennzeichnet durch** die folgenden Schritte
e) Klassieren von mindestens einem Teil der entfernten CaO-haltigen Bodenasche in einen groben Bodenaschenanteil und einen feineren Bodenaschenanteil in einem Klassierer der ersten Stufe (42), wobei der grobe Bodenaschenanteil aus Teilchen mit einer Teilchengröße besteht, die größer als eine erste vorbestimmte Grenze ist;
f) Entfernen des groben Bodenaschenanteils aus dem Kessel als erstes Verbrennungsprodukt (46),
g) Fördern des feineren Bodenaschenanteils von dem Klassierer der ersten Stufe (42) zu einem Klassierer der zweiten Stufe (42'), um den feineren Bodenaschenanteil in einen feinsten Bodenaschenanteil und einen Bodenaschenanteil mittlerer Größe zu klassieren,
h) Entfernen des feinsten Bodenaschenanteils als zweites Verbrennungsprodukt,
i) Fördern des Aschenanteils mittlerer Größe zu einer Mühle (50) zum Mahlen des Bodenaschenanteils, um eine mittlere Teilchengröße einer zweiten vorbestimmten Grenze zu erhalten;
j) Fördern von mindestens einem Teil des gemahlenen Bodenaschenanteils von der Mühle zu einem Hydrator (54) zum Hydratisieren von CaO in dem gemahlenen Bodenaschenanteil mit einer kontrollierten Menge an Wasser oder Dampf (56) zu Ca(OH)₂, und
k) Fördern mindestens eines Teils des Ca(OH)₂ aus dem Hydrator (54) zu dem zirkulierenden Wirbelschicht-Trockenwäscher (22) als Sorptionsmittel.

2. Verfahren zum Verbrennen von schwefelhaltigem Brennstoff in einem zirkulierenden Wirbelschichtkessel nach Anspruch 1, **dadurch gekennzeichnet, dass** die zweite vorbestimmte Grenze von dem CaO-Gehalt des zu der Mühle geförderten Bodenaschenanteils abhängt.

3. Verfahren zum Verbrennen von schwefelhaltigem Brennstoff in einem zirkulierenden Wirbelschichtkessel nach Anspruch 2, **dadurch gekennzeichnet, dass** die zweite vorbestimmte Grenze umso kleiner ist, je niedriger der CaO-Gehalt des zu der Mühle geförderten Bodenaschenanteils ist.

4. Verfahren zum Verbrennen von schwefelhaltigem Brennstoff in einem zirkulierenden Wirbelschichtkessel nach Anspruch 1, **dadurch gekennzeichnet, dass** die zweite vorbestimmte Grenze von dem CaO-Gehalt des zu der Mühle geförderten Bodenaschenanteils durch die Formel 0,43 M ± 3 µm bedingt wird, in der M der CaO-Gehalt in Prozent ist.

5. Verfahren zum Verbrennen von schwefelhaltigem Brennstoff in einem zirkulierenden Wirbelschichtkessel nach Anspruch 1, **dadurch gekennzeichnet, dass** das Verfahren einen Schritt des Zuführens von frischem CaO (60) in den Hydrator (54) umfasst.

6. Verfahren zum Verbrennen von schwefelhaltigem Brennstoff in einem zirkulierenden Wirbelschichtkessel nach Anspruch 1, **dadurch gekennzeichnet, dass** das Verfahren einen Schritt des Zuführens eines Teils des abgeschiedenen Feinstaubs aus dem Staubabscheider (30) zu dem Hydrator (54) umfasst.

7. Verfahren zum Verbrennen von schwefelhaltigem Brennstoff in einem zirkulierenden Wirbelschichtkessel nach Anspruch 1, **dadurch gekennzeichnet, dass** das Verfahren einen Schritt des Förderns eines Teils des gemahlenen Feinascheanteils aus der Mühle direkt zu dem Ofen (12) umfasst.

8. Verfahren zum Verbrennen von schwefelhaltigem Brennstoff in einem zirkulierenden Wirbelschichtkessel nach Anspruch 1, **dadurch gekennzeichnet, dass** das Verfahren einen Schritt des Zuführens eines Teils des abgeschiedenen Feinstaubs aus dem Staubabscheider (30) direkt zu dem Ofen (12) umfasst.

9. Vorrichtung zum Verbrennen von schwefelhaltigem Brennstoff in einem zirkulierenden Wirbelschichtkessel (10), die Folgendes umfasst:
- einen Ofen (12) und Mittel zum Zuführen von schwefelhaltigem Brennstoff (14) zu dem Ofen (12) zum Verbrennen des Brennstoffs und Erzeugen von SO₂-haltigem Abgas;
- Mittel zum Zuführen von CaCO₃-haltigem Sorptionsmittel (16) zu dem Ofen zum Umwandeln des CaCO₃ zu CaO und Einsetzen eines Teils des CaO in dem Ofen, um einen Teil des SO₂ zu CaSO₄ umzuwandeln;
- einen zirkulierenden Wirbelschicht-Trockenwäscher (22), der einen Reaktor (28) mit Mitteln zur Zuführen von Wasser und Ca(OH)₂ umfasst, zum Umwandeln von SO₂ im Abgas in CaSO₃ und CaSO₄ und einen Staubabscheider (30) in Gasströmungsverbindung mit dem Reaktor, zum Abtrennen von Feinstaub aus dem Abgas;
- einen Abgaskanal (20) zum Fördern des Abgases aus dem Ofen zu dem zirkulierenden Wirbelschicht-Trockenwäscher (22), und
- Mittel zum Entfernen CaO-haltiger Bodenasche (40) aus dem Ofen,
**dadurch gekennzeichnet, dass** die Vorrichtung Folgendes umfasst
- einen Klassierer (42) der ersten Stufe zum Klassieren von mindestens einem Teil der entfernten CaO-haltigen Bodenasche in einen groben Bodenaschenteil und einen feineren Bodenaschenanteil, wobei der grobe Bodenaschenanteil aus Teilchen mit einer Teilchengröße besteht, die größer als eine erste vorbestimmte Grenze ist;
- einen Abführkanal (44) zum Entfernen des groben Bodenaschenanteils aus dem Klassierer der ersten Stufe zu einem Trichter (46),
- einen Klassierer der zweiten Stufe (42') zum Klassieren des feineren Bodenaschenanteils in einen feinsten Bodenaschenanteil und einen Bodenaschenanteil mittlerer Größe, wobei der feinste Bodenaschenanteil aus Teilchen mit einer Teilchengröße besteht, die kleiner als eine dritte vorbestimmten Grenze ist;
- einen Abführkanal zum Entfernen des feinsten Bodenaschenanteils;
- eine Mühle (50);
- Mittel zum Fördern des Bodenaschenabschnitts mittlerer Größe zu einem Feinaschekanal (48), zum Fördern des Bodenaschenanteils mittlerer Größe zu der Mühle (50), zum Mahlen des Bodenaschenanteils, um eine mittlere Teilchengröße einer zweiten vorbestimmten Grenze zu erhalten;
- einen Hydrator (54);
- einen Kanal für gemahlene Asche (52) zum Fördern von mindestens einem Teil des gemahlenen Bodenaschenanteils aus der Mühle (50) zu dem Hydrator (54), zum Hydratisieren von CaO in dem Bodenaschenanteil mit einer kontrollierten Menge Wasser oder Dampf (56) zu Ca(OH)₂, und
- einen Kanal hydratisierter Asche (58), zum Fördern von mindestens einem Teil des Ca(OH)₂ aus dem Hydrator (54) zu dem zirkulierenden Wirbelbett-Trockenwäscher (22) als Sorptionsmittel.

10. Vorrichtung zum Verbrennen von schwefelhaltigem Brennstoff in einem zirkulierenden Wirbelschichtkessel (10) nach Anspruch 9, **dadurch gekennzeichnet, dass** die Vorrichtung Mittel (74) zum Steuern der Mühle (50) auf der Grundlage des CaO-Gehalts des zu der Mühle geförderten Bodenaschenanteils umfasst.

11. Vorrichtung zum Verbrennen von schwefelhaltigem Brennstoff in einem zirkulierenden Wirbelschichtkessel (10) nach Anspruch 10, **dadurch gekennzeichnet, dass** die Vorrichtung Mittel (66) zum Fördern eines Teils des gemahlenen Bodenaschenanteils aus der Mühle zu dem Ofen (12) umfasst.

## Revendications

1. Procédé de combustion de combustible soufré dans une chaudière à lit fluidisé circulant (10), comprenant les étapes consistant à :
a) alimenter le combustible soufré (14) dans un four (12) de la chaudière, effectuer la combustion du combustible et générer un gaz d'échappement contenant du SO₂;
b) alimenter un absorbant (16) contenant du CaCO₃ dans le four pour convertir le CaCO₃ en CaO et utiliser une partie du CaO du four pour convertir une partie du SO₂ en CaSO₄ ;
c) transporter le gaz d'échappement le long d'un canal (20) de gaz d'échappement du four jusqu'à un épurateur à lit fluidisé circulant sec (22) comprenant un réacteur (28) ayant des moyens d'alimentation d'eau et de Ca(OH)₂ pour convertir le SO₂ du gaz d'échappement en CaSO₃ et CaSO₄ et un séparateur de poussière (30) en connexion d'écoulement de gaz avec le réacteur pour séparer la matière particulaire du gaz d'échappement, et
d) éliminer les cendres résiduelles (40) contenant du CaO du four,
**caractérisé par** les étapes consistant à
e) classifier au moins une partie des cendres résiduelles contenant du CaO éliminées en une partie cendres résiduelles grossières et une partie cendres résiduelles plus fines dans un premier classificateur à étages (42) dans lequel la partie cendres résiduelles grossières se compose de particules ayant une taille de particule plus grosse qu'une première limite prédéfinie ;
f) éliminer la partie cendres résiduelles grossières de la chaudière en tant que premier produit de combustion (46),
g) transporter la partie cendres résiduelles plus fines du premier classificateur à étages (42) jusqu'à un second classificateur à étages (42') pour classifier la partie cendres résiduelles plus fines en une partie cendres résiduelles les plus fines et une partie cendres résiduelles de taille intermédiaire,
h) éliminer la partie cendres résiduelles les plus fines de la chaudière en tant que second produit de combustion,
i) transporter la partie cendres résiduelles de taille intermédiaire vers un broyeur (50) afin de broyer la partie cendres résiduelles pour qu'elle ait une taille de particule médiane d'une deuxième limite prédéfinie ;
j) transporter au moins une partie de la partie cendres résiduelles broyées du broyeur jusqu'à un un dispositif d'hydratation (54) afin d'hydrater le CaO de la partie cendres résiduelles broyées, avec une quantité régulée d'eau ou de vapeur (56), en Ca(OH)₂, et
k) transporter au moins une partie du Ca(OH)₂ du dispositif d'hydratation (54) jusqu'à l'épurateur à lit fluidisé circulant sec (22) sous la forme d'un absorbant.

2. Procédé de combustion de combustible soufré dans une chaudière à lit fluidisé circulant selon la revendication 1, **caractérisé en ce que** la deuxième limite prédéfinie dépend de la teneur en CaO de la partie cendres résiduelles transportée vers le broyeur.

3. Procédé de combustion de combustible soufré dans une chaudière à lit fluidisé circulant selon la revendication 2, **caractérisé en ce que** plus la deuxième limite prédéfinie est faible, plus la teneur en CaO de la partie cendres résiduelles transportée vers le broyeur est basse.

4. Procédé de combustion de combustible soufré dans une chaudière à lit fluidisé circulant selon la revendication 1, **caractérisé en ce que** la deuxième limite prédéfinie dépend de la teneur en CaO de la partie cendres résiduelles transportée vers le broyeur par la formule 0,43*M ± 3 µm dans laquelle M est la teneur en CaO en pourcentage.

5. Procédé de combustion de combustible soufré dans une chaudière à lit fluidisé circulant selon la revendication 1, **caractérisé en ce que** le procédé comprend une étape consistant à alimenter du CaO frais (60) dans le dispositif d'hydratation (54).

6. Procédé de combustion de combustible soufré dans une chaudière à lit fluidisé circulant selon la revendication 1, **caractérisé en ce que** le procédé comprend une étape consistant à alimenter une partie de la matière particulaire séparée du séparateur de poussière (30) jusqu'au dispositif d'hydratation (54).

7. Procédé de combustion de combustible soufré dans une chaudière à lit fluidisé circulant selon la revendication 1, **caractérisé en ce que** le procédé comprend une étape consistant à transporter une partie de la partie cendres fines broyées du broyeur directement jusqu'au four (12).

8. Procédé de combustion de combustible soufré dans une chaudière à lit fluidisé circulant selon la revendication 1, **caractérisé en ce que** le procédé comprend une étape consistant à alimenter une partie de la matière particulaire séparée du séparateur de poussière (30) directement jusqu'au four (12).

9. Appareil pour la combustion de combustible soufré dans une chaudière à lit fluidisé circulant (10), comprenant :
- un four (12) et un moyen d'alimentation de combustible soufré (14) dans le four (12) pour effectuer la combustion du combustible et générer un gaz d'échappement contenant du SO₂;
- un moyen d'alimentation d'un absorbant (16) contenant du CaCO₃ dans le four pour convertir le CaCO₃ en CaO et utiliser une partie du CaO du four pour convertir une partie du SO₂ en CaSO₄ ;
- un épurateur à lit fluidisé circulant sec (22) comprenant un réacteur (28) ayant des moyens d'alimentation d'eau et de Ca(OH)₂ pour convertir le SO₂ du gaz d'échappement en CaSO₃ et CaSO₄ et un séparateur de poussière (30) en connexion d'écoulement de gaz avec le réacteur pour séparer la matière particulaire du gaz d'échappement ;
- un canal (20) de gaz d'échappement pour transporter le gaz d'échappement du four jusqu'à l'épurateur à lit fluidisé circulant sec (22), et
- un moyen pour éliminer les cendres résiduelles (40) contenant du CaO du four,
**caractérisé en ce que** l'appareil comprend
- un premier classificateur à étages (42) pour classifier au moins une partie des cendres résiduelles contenant du CaO éliminées en une partie cendres résiduelles grossières et une partie cendres résiduelles plus fines dans lequel la partie cendres résiduelles grossières se compose de particules ayant une taille de particule plus grosse qu'une première limite prédéfinie ;
- un canal d'évacuation (44) pour éliminer la partie cendres résiduelles grossières du premier classificateur à étages jusqu'à une trémie (46),
- un second classificateur à étages (42') pour classifier la partie cendres résiduelles plus fines en une partie cendres résiduelles les plus fines et une partie cendres résiduelles de taille intermédiaire dans lequel la partie cendres résiduelles les plus fines se compose de particules ayant une taille de particule inférieure à une troisième limite prédéfinie ;
- un canal d'évacuation pour éliminer la partie cendres résiduelles les plus fines ;
- un broyeur (50) ;
- un moyen pour transporter la partie cendres résiduelles de taille intermédiaire jusqu'à un canal (48) de cendres fines pour transporter la partie cendres résiduelles de taille intermédiaire jusqu'au broyeur (50) afin de broyer la partie cendres résiduelles pour qu'elle ait une taille de particule médiane d'une deuxième limite prédéfinie ;
- un dispositif d'hydratation (54) ;
- un canal (52) de cendres broyées pour transporter au moins une partie de la partie cendres résiduelles broyées du broyeur (50) jusqu'au dispositif d'hydratation (54) afin d'hydrater le CaO de la partie cendres résiduelles broyées, avec une quantité régulée d'eau ou de vapeur (56), en Ca(OH)₂, et
- un canal (58) de cendres hydratées pour transporter au moins une partie du Ca(OH)₂ du dispositif d'hydratation (54) jusqu'à l'épurateur à lit fluidisé circulant sec (22) sous la forme d'un absorbant.

10. Appareil de combustion de combustible soufré dans une chaudière à lit fluidisé circulant (10) selon la revendication 9, **caractérisé en ce que** l'appareil comprend un moyen (74) pour commander le broyeur (50) en fonction de la teneur en CaO de la partie cendres résiduelles transportée jusqu'au broyeur.

11. Appareil de combustion de combustible soufré dans une chaudière à lit fluidisé circulant (10) selon la revendication 10, **caractérisé en ce que** l'appareil comprend un moyen (66) pour le transport d'une partie de la partie cendres résiduelles broyées du broyeur jusqu'au four (12).
